**Europäisches Patentamt**

**European Patent Office**

**Office européen des brevets**

(19)

(11) Publication number : **0 329 135 B1**

(12)

# EUROPEAN PATENT SPECIFICATION

(45) Date of publication of patent specification :
06.05.92 Bulletin 92/19

(51) Int. Cl.⁵ : **D21F 3/08, B23P 11/02**

(21) Application number : **89102680.9**

(22) Date of filing : **16.02.89**

(54) **Method for lining a roll, or the like, especially a press roll of a paper or pulp machine.**

(30) Priority : **16.02.88 FI 880725**

(43) Date of publication of application :
**23.08.89 Bulletin 89/34**

(45) Publication of the grant of the patent :
**06.05.92 Bulletin 92/19**

(84) Designated Contracting States :
**AT DE ES FR GB IT**

(56) References cited :
**DE-A- 1 504 702**
**DE-A- 2 316 159**
**DE-B- 1 168 746**
**FI-B- 41 489**
**FI-B- 44 075**
**FI-B- 44 076**
**US-A- 2 219 085**
**US-A- 3 007 231**

(56) References cited :
**US-A- 3 098 285**
**US-A- 3 156 968**
**US-A- 3 526 939**
**US-A- 4 012 821**
**US-A- 4 627 144**

(73) Proprietor : **VALMET-AHLSTROM INC.**
**SF-48601 Karhula (FI)**

(72) Inventor : **Vitikainen, Hannu**
**Karhunkatu 18 B**
**SF-48600 Karhula (FI)**
Inventor : **Järvinen, Pekka**
**Sorsankatu 3**
**SF-49400 Hamina (FI)**
Inventor : **Hepolehto, Hannu**
**Maitikkatie 2 F 31**
**SF-48800 Karhula (FI)**

(74) Representative : **Zipse + Habersack**
**Kemnatenstrasse 49**
**W-8000 München 19 (DE)**

**EP 0 329 135 B1**

Jouve, 18, rue Saint-Denis, 75001 PARIS

## Description

The object of the invention is to provide a method for lining a roll, or the like, especially a press roll of a paper or pulp machine, in which a metal shell, prestressed to a controlled degree, is fitted round and tightly against a metal body.

The lining method according to the invention is meant to be used when manufacturing rolls or other such machine parts which are exposed to substances causing corrosion and/or wear and of which great stiffness and/or strength is required.

The method according to the invention is particularly suitable when manufacturing either grooved or plain surfaced press rolls for paper and pulp machines.

Previously known methods for lining rolls have been disclosed in Finnish patents 44076 and 44075. In patent 44076 a lining method is disclosed in which the roll to be lined is surrounded with a thin tube or plates that are bent round the roll and welded together to form a tube. After this another tubular shell, whose surface layer is melted by deposition welding or the like, is fitted round the first tube. The cooling down of the outer shell causes compression of the inner shell around the roll body, after which the outer shell can be removed for example by splitting it by sawing. In patent 44075 a lining method is disclosed in which a shell is fitted tightly against the roll body by melting the outer surface layer of the shell, the cooling process of which causing contraction of the shell round the body, after which the melted surface layer is removed either partly or entirely. US patent 3,526,939 discloses a lining method in which a shell is fitted tightly around the roll body by melting the outer surface layer of the shell, which, when cooling, causes the contraction of the shell round the roll body, after which the melted surface layer is removed by machining. The methods discribed above require weld materials and plenty of working time. In addition, unfavourable changes in the micro structure of the materials are caused by depositon welding.

In Finnish patent 41489 a method for manufacturing press rolls is disclosed in which a thick-walled roll body is surrounded with a thin corrosion-resistant metal plate and additional material of the same composition as the plate is deposition-welded on it, the cooling of which causing contraction of the plate round the roll body. Even though the method is practicable in itself, it still has some limitations. The material of the lining plate has to be easy to weld. In order to achieve the desired contraction effect, plenty of weld material has to be used and the method is thus costly, especially when considering that part of the surface layer has to be removed by machining in order to obtain an even surface. Moreover, this method is not suitable for making thin lining layers, as then the deposition welding is technically difficult to do.

Further previously known methods for lining rolls have been disclosed in, e.g., US patents 3,098,285 and 2,219,085, in the first of which the lining is done by heating and rolling so as to bring about plastic deformation. This method demands great force and special equipment and is only suitable for making thin linings. In the latter method the lining is accomplished by pressing the parts of the plate shell against the roll body and, after this, welding the transversal joints together. In order to obtain a reliable shrink fit between the shell and the roll body, a great pressing force is needed, and a great deal of tools are required for carrying out the method, which renders it impractical.

Further, various methods are known in which the desired surface layer is obtained by adding more material onto the roll body by means of deposition welding, as described for instance in US patent 3,156,968, or onto a separate tubular shell as described in US patent 3,007,231. All the methods in which the surface layer is formed by melting welding wire are uneconomical.

Further, various lining methods are known which are based on cold-pressing or the like, but these require complicated special equipment and are impractical for lining big pieces.

The object of this invention is to provide a method which does not have the above mentioned limitations or drawbacks, and which is suitable for making metal linings.

The method according to the invention is characterized by what is stated in the characterizing portion of claim 1.

Other preferred features of the invention are presented in claims 2-8.

The invention is described in detail below, with reference to the figures in the attached drawings.

Fig.1 shows a method according to the invention for forming a shell around the roll.

Fig.2 is a cross section of the roll before the heating phase, when the shell has been fitted on the roll.

Fig.3 is a cross section of the roll after the heating phase, when the shell has been expanded due to thermal expansion.

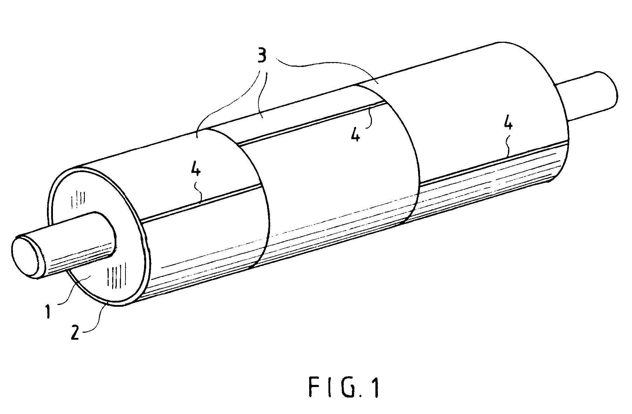

As shown in fig.1, in one embodiment according to the invention, a shell 2 of suitable steel, which is formed of a plurality of plates 3, is fitted onto a roll body 1. The length of the shell plate 3 is dependent on the diameter of the roll body 1 in the way that a suitable gap 5 is left in a longitudinal joint 4. The shell plate 3 is fitted onto the roll body 1 in the way that the desired gap 5 is left in the longitudinal joint. A heating element, preferably a resistance mat 6, is placed round the shell and connected to an electrical apparatus 8, the heating element being heated to the desired temperature. Once the shell plate 3 has reached the desired temperature it is mechanically tightened against the roll body 1. The shell plate 3 expands due to thermal expansion in the way that a gap suitable for welding is obtained, after which a longitudinal joint 4 is welded. The heating element 6 is then removed and as the shell plate 3 cools down it will strive to retain its original dimensions and thus clamp tightly against the body. The phases of the method are carried out plate by plate starting from the middle and adding plates one by one at both ends in turn.

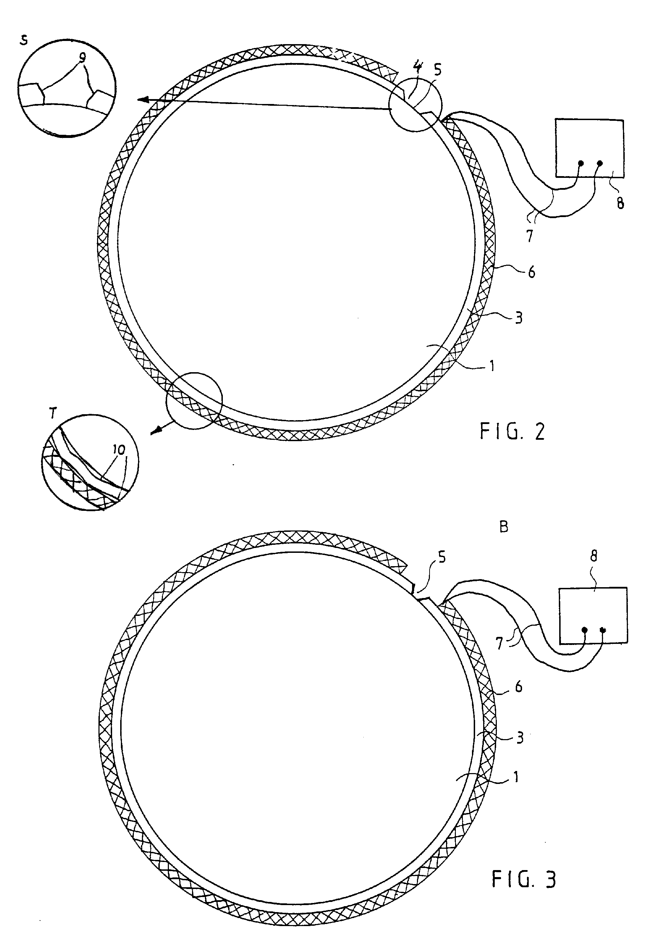

Figs 2 and 3 show the change in the length of gap 5 between phase A, before the heating phase, and phase B, immediately after the heating phase, and the location of the heating element 6 on the shell plate 3. Fig 2 also shows partial enlargements S and T. Partial enlargement S shows welding bevels 9 of the ends of shell plate 3 at the gap 5. Partial enlargement T shows dimensional deviations 10 after the prebending of the shell plate 3, which cause slackness.

According to the method of the invention, the shell plate is fitted on the roll body after the rough work stages. At that time the gap is so large that welding cannot be carried out. The length (i.e. width) of the gap is thus the dimension required by the welding groove with the amount of thermal expansion produced during heating added thereto. After that, the shell plate is welded together at its longitudinal joint. If the heating and the tightening are successfull, then in favourable conditions the contraction of the shell reaches the yield limit as close as possible.

The dimension demanded for the welding groove depends on the thickness of the shell 2. Accordingly, the length of the gap 5 prior to the heating phase is about 0.6 - 2.0% of the diameter of the roll.

The heating temperature of rolls with a diameter < 1000mm = 300 - 400°C and that of rolls with a diameter > 1000mm = 100 - 400°C.

In one embodiment of the method according to the invention, the material used for the roll body 1 is cast iron and the material used for the shell 2 is stainless or acid-resistant steel or other corresponding metal having sufficient chemical and mechanical strength.

The lining method according to the present invention can also be used in bushing roll shafts and the like, for instance in order to repair damage caused by wear.

The invention is not restricted to the embodiments described and shown above but, as is evident to persons skilled in the art, many modifications are possible within the scope of the inventional idea defined in the following claims.

**Claims**

1. A method for lining a roll, or the like, especially a press roll of a paper or pulp machine, in which a metal shell (2) formed of at least a shell plate (3), prestressed to a controlled degree, is fitted around and tightly against a metal body, (1) **characterized** in that the method comprises, in combination, the following steps:
(a) the length of the shell plate (3) is dimensioned depending on the diameter of a roll body (1) in the way that, in the initial stage of the lining, a gap (5) will be left in a longitudinal joint (4) of the shell (2);
(b) the shell plate (3) is fitted round the roll body (1) in the way that the gap (5) is left in the longitudinal joint (4) of the shell plate (3);
(c) the shell plate (3) is heated by means of a heating element (6) in the way that the shell plate is thermally expanded, the shell plate (3) being tightened at the same time causing the gap (5) to diminish;
(d) the longitudinal joint (4) is welded;
(e) the shell plate (3) is allowed to cool down and thus contract and tighten to the desired tightness against the roll body (1).

2. The method according to claim 1 **characterized** in that the length of the gap (5) is calculated to remove the slackness caused by the dimensional deviations (10) after the prebending of the shell (2) and also to prevent the thermal expansion due to the heating of the shell (2), which has been calculated for the contraction after cooling down to exceed of the yield limit in the shell (2), and further, the dimension demanded for the welding groove, which depends on the thickness of the shell (2), is added to the length of the gap (5).

3. The method according to claim 2 **characterized** in that the length of the gap (5) prior to the heating phase is 0.6-2.0% of the diameter of the roll.

4. Any of the methods according to claims 1-3 **characterized** in that the length of the gap (5) after the heating phase and tightening constitutes a suitable dimension for the welding groove, the thickness of the material of a welding rod and that of the plate taken into account.

5. Any of the methods according to claims 1-4 **characterized** in that the heating temperature of rolls whose diameter < 1000 mm is 300°C-400°C and that of rolls >1000 mm is 100°C-400°C during the heating phase.

6. Any of the methods according to claims 1-5 **characterized** in that a resistance mat is used as a heating element (6).

7. Any of the methods according to claims 1-6 **characterized** in that the material used for the shell is stainless or acid-resistant steel or some other corresponding metal having sufficient chemical and mechanical strength.

8. Any of the methods according to claims 1-7 **characterized** in that the method is used for bushing roll shafts or the like.

## Patentansprüche

1. Verfahren zum Verkleiden einer Walze oder dergleichen, insbesondere einer Presswalze einer Papiermaschine oder eines Holländers, bei welchem eine aus mindestens einer Mantelplatte (3) gebildete und gesteuert vorgespannte Metallummantelung (2) um und fest gegen einen Metallkörper (1) befestigt wird, dadurch gekennzeichnet, daß das Verfahren in Kombination die folgenden Verfahrensschritte umfaßt:

(a) Dimensionieren der Länge der Mantelplatte (3) in Abhängigkeit vom Durchmesser eines Walzenkörpers (1) derart, daß im Anfangsstadium der Verkleidung entlang einer Längsverbindung (4) der Ummantelung (2) ein Spalt (5) übrigbleiben wird;

(b) Umlegen der Mantelplatte (3) um den Walzenkörper (1) derart, daß entlang der Längsverbindung (4) der Mantelplatte (3) der Spalt (5) übrigbleibt;

(c) Erhitzen der Mantelplatte (3) mittels eines Heizelements (6) derart, daß die Mantelplatte thermisch expandiert und festgespannt wird und gleichzeitig eine Verkleinerung des Spaltes (5) bewirkt;

(d) Verschweißen der Längsverbindung (4);

(e) Abkühlen der Mantelplatte (3), wodurch diese sich zusammenzieht und mit einer gewünschten Straffheit gegen den Walzenkörper (1) festgespannt wird.

2. Verfahren nach Anspruch 1, dadurch gekennzeichnet, daß die Länge des Spaltes (5) derart kalkuliert ist, um das durch die Maßabweichungen (10) bewirkte Spiel zu beseitigen nach dem Vorbiegen der Ummantelung (2) und um auch die thermische Expansion aufgrund der Erhitzung der Ummantelung (2) zu verhindern, welche Länge kalkuliert worden ist für die Kontraktion nach dem Abkühlvorgang zur Überschreitung der Streckgrenze in der Ummantelung (2),und des weiteren die für die Schweißfuge benötigte Abmessung, die abhängig ist von der Dicke der Ummantelung (2), zur Länge des Spaltes (5) hinzugezählt wird.

3. Verfahren nach Anspruch 2, dadurch gekennzeichnet, daß die Länge des Spaltes (5) vor der Erhitzungsphase 0.6 - 2.0 % des Durchmessers der Walze beträgt.

4. Verfahren nach einem der Ansprüche 1 bis 3, dadurch gekennzeichnet, daß die Länge des Spaltes (5) nach der Erhitzungsphase und Anspannung ein für die Schweißfuge geeignetes Maß einnimmt unter Berücksichtigung der Materialstärke eines Schweißstabes bzw. -elektrode und der Materialstärke der Platte.

5. Verfahren nach einem der Ansprüche 1 bis 4, dadurch gekennzeichnet, daß die Erhitzungstemperatur für Walzen mit einem Durchmesser < 1000 mm 300°C bis 400°C beträgt und diejenige von Walzen > 1000 mm 100°C bis 400°C während der Heizphase beträgt.

6. Verfahren nach einem der Ansprüche 1 bis 5, dadurch gekennzeichnet, daß als Heizelement (6) eine Heizmatte verwendet wird.

7. Verfahren nach einem der Ansprüche 1 bis 6, dadurch gekennzeichnet, daß das für die Ummantelung verwendete Material rostfreier oder säure-resistenter Stahl oder ein anderes entsprechendes Metall ist mit ausreichender chemischer und mechanischer festigkeit.

8. Verfahren nach einem der Ansprüche 1 bis 7, dadurch gekennzeichnet, daß dieses Verfahren verwendet wird zum Ausbuchsen von Walzenwellen bzw. -spindeln oder ähnlichem.

## Revendications

1. Procédé pour enrober un cylindre ou analogue, en particulier un rouleau compresseur d'une machine à papier ou d'une pile raffineuse, dans lequel une coquille métallique (2) formée par au moins une plaque (3), précontrainte selon un degré commandé, est disposée autour et appliquée étroitement contre un corps métallique (1), caractérisé en ce que le procédé comprend, en combinaison, les étapes suivantes:

(a) la longueur de la plaque (3) de la coquille est dimensionnée en fonction du diamètre du corps (1) du cylindre de manière qu'au cours de l'étape initiale de l'enrobage, un intervalle (5) soit maintenu dans un joint longitudinal (4) de la coquille (2);

(b) la plaque (3) de la coquille est disposée autour du corps (1) du cylindre de manière que l'intervalle (5) soit conservé dans le joint longitudinal (4) de la plaque (3) de la coquille;

(c) la plaque (3) de la coquille est chauffée au moyen d'un élément chauffant (6) de manière que la plaque de la coquille s'allonge thermiquement, la plaque (3) de la coquille se resserrant dans le même temps et provoquant la diminution de l'intervalle (5);

(d) le joint longitudinal (4) est soudé;

(e) on laisse la plaque (3) de la coquille se refroidir et ainsi elle se contracte et se resserre selon la tension désirée contre le corps (1) du cylindre.

2. Procédé selon la revendication 1, caractérisé en ce que la longueur de l'intervalle (5) est calculée pour éliminer le jeu provoqué par les variations de dimension après la courbure préalable de la coquille (2) et également pour éviter la dilatation thermique due au chauffage de la coquille (2), qui a été calculée de manière que la contraction après refroidissement dépasse la limite élastique de la coquille (2), et en outre la dimension exigée pour la rainure de soudage, qui dépend de l'épaisseur de la coquille (2), est ajoutée à la longueur de l'intervalle (5).

3. Procédé selon la revendication 2, caractérisé en ce que la longueur de l'intervalle (5) avant la phase de chauffage représente de 0,6 à 2,0 % du diamètre du cylindre.

4. L'un quelconque des procédés selon les revendications 1 à 3, caractérisé en ce que la longueur de l'intervalle (5) après la phase de chauffage et de serrage constitue une dimension appropriée pour la rainure de soudage, l'épaisseur du matériau d'une baguette de soudure et celle de la plaque étant prises en compte.

5. L'un quelconque des procédés selon les revendications 1 à 4, caractérisé en ce que la température de chauffage destinée à des cylindres dont le diamètre est inférieur à 1000 mm est comprise entre 300°C et 400°C et celle des cylindres dont le diamètre est supérieur à 1000 mm est comprise entre 100°C et 400°C pendant la phase de chauffage.

6. L'un quelconque des procédés selon les revendications 1 à 5, caractérisé en ce qu'un matelas à résistance est utilisé comme élément chauffant (6).

7. L'un quelconque des procédés selon les revendications 1 à 6, caractérisé en ce que le matériau utilisé pour la coquille est de l'acier inoxydable ou résistant aux acides, ou tout autre métal correspondant présentant une résistance chimique et mécanique suffisante.

8. L'un quelconque des procédés selon les revendications 1 à 7, caractérisé en ce que le procédé est utilisé pour former un manchon autour d'arbres de cylindres ou analogues.

FIG. 1

FIG. 2

FIG. 3